(19) Europäisches Patentamt

European Patent Office

Office européen des brevets

(11) EP 1 341 731 B1

(12) EUROPEAN PATENT SPECIFICATION

(45) Date of publication and mention
of the grant of the patent:
**11.08.2004 Bulletin 2004/33**

(51) Int Cl.7: **C03B 37/05**

(86) International application number:
**PCT/EP2001/011578**

(21) Application number: **01987734.9**

(22) Date of filing: **08.10.2001**

(87) International publication number:
**WO 2002/032821 (25.04.2002 Gazette 2002/17)**

(54) **CENTRIFUGAL FIBERISING APPARATUS AND METHODS**

ZENTRIFUGALFASERHERSTELLUNGSVORRICHTUNG UND -VERFAHREN

APPAREIL ET PROCEDES DE FIBRAGE CENTRIFUGE

(84) Designated Contracting States:
**AT BE CH CY DE DK ES FI FR GB GR IE IT LI LU
MC NL PT SE TR**
Designated Extension States:
**SI**

(30) Priority: **18.10.2000 EP 00122246**

(43) Date of publication of application:
**10.09.2003 Bulletin 2003/37**

(73) Proprietor: **Rockwool International A/S
2640 Hedehusene (DK)**

(72) Inventors:
• **TONDER, Flemming, Weiss
DK-4450 Jyderup (DK)**
• **NEILSEN, Dag
DK-4000 Roskilde (DK)**

(74) Representative: **Jennings, Guy Kenneth
GILL JENNINGS & EVERY,
Broadgate House,
7 Eldon Street
London EC2M 7LH (GB)**

(56) References cited:
**EP-A- 0 195 725         WO-A-90/15032
WO-A-97/20779**

**Description**

This invention relates to centrifugal fiberising spinner apparatus of the type which comprise one or more rotors which are mounted about a substantially horizontal axis, whereby mineral melt poured or thrown onto the or each rotor is thrown off as fibres.

The conventional arrangement of such apparatus has been, and in many instances still is, an arrangement whereby a plurality of rotors are arranged on a very bulky housing on axles that extend into the spinner housing, a powerful motor is located outside the spinner housing, and there are belts or other means for transmitting the drive from the motor to the axles of the rotors.

More recently there have been descriptions of centrifugal fiberising spinners which comprise coaxial spinner units in which each unit comprises a unit housing, a motor which is mounted in the housing, an axle which is rotatably driven by and coaxial with the motor, and a rotor mounted on the axle distant from the motor. Examples of such apparatus are shown in, for instance, WO-A-88/06146, WO-A-96/36573 (Figure 2) and WO-A-96/38391 (Figure 4).

A major engineering problem with conventional spinner apparatus and with these coaxial units is that it is desirable for the rotor to rotate at high speed, but the rotor is subject to eccentric forces due to the melt being poured or thrown onto it. Another problem is that the rotor is subject to variable wear. This worsens the eccentric problems and also necessitates the ability to replace the rotor when the wear is too high. Another problem is that the melt which is on or adjacent to the rotor is at very high temperatures (well over 1,000°C) and the radiant heat is liable to damage sophisticated engineering parts. Another problem is that it is desirable to be able to force liquid or solid material such as binder or other additives out through the rotor to mix into the cloud of fibres which is formed off the rotor.

The need to replace the rotor has resulted in the design of a rotor assembly in which the rotor normally is mounted on the axle as a sliding fit but in a manner which is intended to be tight. For instance there may be a clearance of not more than 0.1mm between the inner surface of the rotor bore and the outer surface of the axle, and bolts may be used to lock the rotor on the axle. An example is in EP-A-0059152 Figure 2. Unfortunately the provision of a sufficient clearance to allow a sliding fit results, in practice, in sufficient movement during normal high speed operation to cause additional eccentric forces on the rotor and the axle.

In order to cope with the totality of the eccentric forces which are encountered on the rotor it has been conventional for the axle of the coaxial unit to be a non-rigid element, that is to say it is made in two parts with a coupling between the parts which can accommodate minor eccentric movement of one part relative to the other. Thus one part of the axle extends from within the motor to the coupling, and another part of the axle extends from the coupling to the rotor.

The axle part which extends from the coupling to the rotor needs its own bearings adjacent the coupling and adjacent the rotor. The engineering associated with the provision of a coupling and these bearings necessarily occupies a significant linear length.

The provision of a coupling in the axle makes it difficult to construct the axle in such a way that fluid and other additives can be pumped coaxially along the axle and out through the rotor. Providing the extra facilities to achieve this occupies further space.

Even when the axle includes a coupling to compensate for eccentric forces, these still occur such that it is necessary to minimise them by using an acceleration field, and usually a rotor speed, that is less than would otherwise be preferred.

These coaxial spinner units therefore are large and heavy (with a typical cascade spinner formed of four such units weighing about two tons) but the industry has accepted this as satisfactory. This is understandable since these units are themselves a relatively recent development and spinners formed from them are very much more convenient than the traditional spinners which have external motors, and which are even heavier and are still in widespread operation.

We have realised that it would be desirable to redesign the coaxial spinner units in order that they are much smaller and lighter and in order that they can operate satisfactorily at high speeds without having to be out of operation for prolonged periods for servicing. In particular, we have realised that it would be desirable if all this could be achieved in a unit which could operate with conventional, relatively high, rotor diameters and higher speeds than usual, with the result that the acceleration field is larger than is normally tolerable is conventional units.

The acceleration field is the centripetal acceleration and in this specification by referring to the acceleration field of a rotor we mean the value G

where $G = r\Omega^2$

r is the radius of the respective rotor and

$\Omega$ is the angular velocity of that rotor where

$$\Omega = \frac{2\pi n}{60}$$

where n is the revolutions per minute.

According to the invention we provide a centrifugal fiberising spinner unit comprising

a housing,

a motor which is mounted in the housing,

an axle which is rotatably driven by, and coaxial with, the motor and which is surrounded by the housing,

and a rotor assembly comprising an inner flange mounted on the axle and a rotor releasably mounted on the flange distant from the motor,

and in this unit

the axle is a rigid axle element which extends from within the motor to the flange through a primary bearing assembly between the axle element and the housing surrounding the axle,

the flange is non-movably fixed on the axle, and

the unit includes passages for leading liquid coolant through the housing and for cooling the motor.

The axle is a rigid element in the sense that it is not possible for there to be movement between different parts of the axle. It can be made of separate parts which are firmly secured to one another so that they cannot move with respect to one another, but preferably the axle is an integral element, i.e., it is a single shaft which extends through the motor and primary bearing assembly to the flange.

The shaft or other rigid axle element preferably extends out from the motor on the side distant from the rotor through a secondary bearing assembly between the axle element and the housing surrounding the axle.

The bearings in the primary and secondary bearing assemblies can be, for instance cylinder bearings, roller bearings or ball bearings, but it is particularly desirable to use ball bearings or roller bearings. In a preferred unit, the bearings in the primary bearing assembly are ball bearings and the bearings in the secondary bearing assembly are roller bearings, for instance of ceramic material (see for instance WO-A-96/36572).

The flange must be non-movably fixed onto the axle. Conventional bolting arrangements do not give this non-movable fix because of the reality that, during high speed operation, some degree of radial movement on the axle will inevitably occur. Even though this may only be a numerically small value, well below 0.1 mm, it may be the cause of large eccentric forces at the periphery of the rotor. In the invention, any way of mounting the flange on the axle so as to insure negative or zero or substantially zero (e.g., below 0.01mm) clearance around the axle, can be used, so as to avoid the risk of eccentric movement during prolonged rotation.

In general, the best way is to insure that the internal diameter of the flange makes a very tight fit with the external diameter of the axle, since significant movement is then impossible. Preferably the tight fit is such that it is not necessary to use bolts or any other removable fastening device in order to improve the tightness of the fit. The preferred non-moveable fixing is achieved by shrink fitting the flange onto the axle.

In order to minimise still further the risk of eccentric forces being generated during use, it is preferred to fit an automatic balancing unit on the axle, generally at a position beyond (i.e., on the side distant from the motor) the primary bearing assembly. Preferably the automatic balancing unit is fitted in the flange or between the flange and the primary bearing assembly.

A suitable automatic balancing unit is described in "Evolution" published by SKF, American Edition, No. 1, 1995 pages 27 to 30. The quoted article explains the principles of construction of suitable automatic balancing units for use in the invention. Reference should also be made to GB-A-832048 and WO-A-97/07347. Suitable equipment is available from SKF under the name "Auto Balancing Unit".

Liquid coolant is passed through the housing through passages arranged so as to achieve cooling of the motor, and preferably also cooling of the primary bearing assembly. This cooling effect may serve both to. remove heat generated in the unit (eg by the motor) and to protect the motor (and preferably other components such as the primary bearing assembly) from external heat, for instance by radiation from the melt.

Any liquid coolant can be used for this purpose, but it is usually convenient to use water. Conveniently water which has cooled the unit is then discharged into the rotor assembly for cooling the inside of the rotor and, generally, for subsequent discharge into the cloud of fibres formed off the rotor. Additionally or alternatively, separate coolant water may be supplied to the rotor assembly.

The rotor is a cylinder which may have generally known construction and which is releasably mounted on the flange by being trapped between the flange, at the end of the rotor cylinder closest to the motor, and a retaining member which is releasably secured to the flange. For instance this retaining member is typically screwed into and/or bolted into the end of the flange.

The motor can be a synchronous motor or an asynchronous motor. The use of asynchronous motor is usually adequate. The power of the motor is generally from 5 to 40, kw. The speed of revolution of the motor is generally from 5000 to 12000 rpm. Suitable motors are available commercially from E and A, Switzerland and Parvex, France and Siemens, Germany and Kavo, Germany and ABB, Sweden. Research leading to suitable motors is described in a thesis by Karl Gebert "Ein Beitrag zur thermischen Modellbildung von schnelldrehenden Motorspindeln" at T.H.Darmstadt published 1997 by Shaker Verlag GmbH.

The axle element preferably has a coaxial bore extending through its length. This bore leads from an inlet at the end distant from the rotor and discharges at the rotor end. By this means liquid additives such as liquid binder, a slurry in liquid of solid additives, or solid additives entrained in air can be pumped along the axle and discharged into the rotor or into the cloud of fibres thrown off the rotor.

Preferably there is a non-rotatable pipe in the bore and the liquid or solid additives are pumped through this pipe. The non-rotatable pipe is preferably fixed in the housing on the side of the motor distant from the rotor. The pipe preferably extends through the bore and through a pipe bearing assembly which is between the stationary pipe and the rotating axle and which is at or close to the rotor end of the axle. Any suitable bearings may be used in this assembly.

The spinner unit may be provided with means for distributing binder or other additives from the front of the rotor assembly, and these may be conventional. The spinner unit may also be provided with means for supplying air forwards along the surface of the rotor.

It is convenient to incorporate in the unit one of the known commercial systems for determining eccentric vibrations before they become significant in order that the rotor can be replaced only when it becomes necessary. Also, operation of the unit can be facilitated by using one of the commercial automatic lubrication systems for the bearings.

Each spinner unit may be used alone, for instance in a free standing state, for fiberisation, in which event an air supply system may be supplied within the unit housing and/or outside the unit housing for supplying a blast of air for promoting fiberisation of melt on the rotor and for transporting fibres away from the rotor. Usually two or more (usually three or four) spinner units are mounted within a cascade spinner housing which includes the air supply system within the unit housings and/or between the unit housings and the spinner housing. The spinner units may be assembled as a centrifugal cascade spinner assembly in a spinner housing, for instance in the same general way as is shown in, for instance, WO-A-96/36573 and WO-A-96/38391.

The invention is of particular value when a spinner assembly is provided as described in WO-A-02/32822 filed even date herewith and the or each spinner unit in the assembly is as defined herein.

As a result of the invention, the length of each unit, and therefore of the cascade spinner, can be reduced by, typically, 20 to 75%, often 50 to 70% and the overall weight of the total unit (and therefore of the total cascade assembly) can be reduced by similar amounts. Thus, redesigning in accordance with the invention can reduce the weight of a cascade spinner of four coaxial units from around 2 tons down to, for instance, 0.75 (or less) to 1 ton without reducing the capacity of the spinner. The length of each unit (between the rear of the motor to the front of the rotor) can be reduced from nearly 2m to about 0.7m. The invention can also allow for increased acceleration fields, for instance with the acceleration field on rotors being increased by for instance 200% to 350%, or more, compared to the acceleration fields which have been previously considered acceptable for rotors of the same size having regard to the need for servicing. For instance a typical maximum acceleration field for a 200mm radius rotor in the invention may be around 315km/s$^2$ (at a speed of 12000rpm) whereas this is about three times the typical maximum for a 200mm radius rotor (at a speed of 7000rpm) in a conventional unit.

The invention is illustrated in the accompanying drawings in which

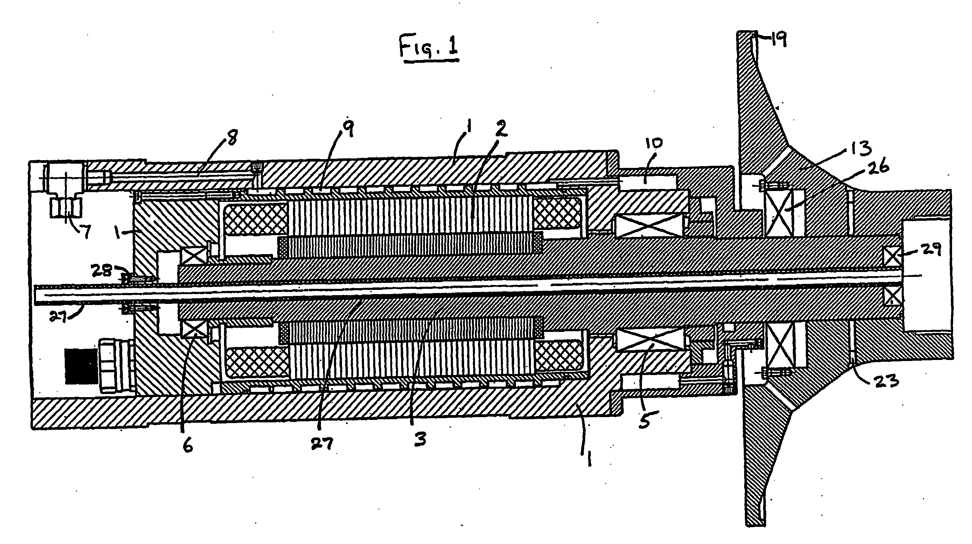

Figure 1 is a cross-section through a spinner unit of the invention showing the flange of the rotor assembly, but with the remainder of the rotor assembly omitted, and

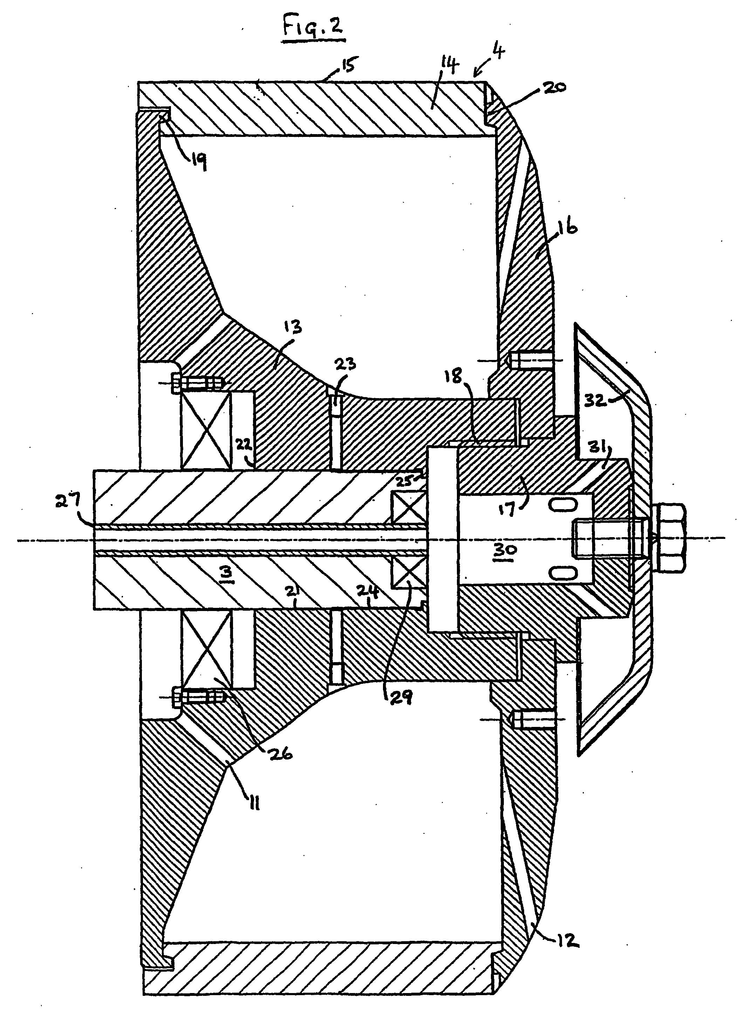

Figure 2 is an enlarged corresponding cross-section through the rotor assembly of the same unit.

The unit comprises a housing 1 with a motor 2 fitted within the housing. The motor is preferably a motor as described above. An integral shaft 3 extends through the motor and is coaxial with the motor and is driven rotatably by the motor. The shaft 3 is a single element which extends from a rotor assembly 4 at one end to the end distant from the rotor assembly.

There is a primary bearing assembly 5 between the housing 1 and the rotatable shaft 3, the bearings of this assembly preferably being ball bearings. There is a secondary bearing assembly 6 between the shaft and the housing 1, at the end of the shaft distant from the rotor assembly 4. The bearings in this secondary bearing assembly may be roller bearings.

Liquid coolant is pumped into the housing at inlet 7 and passes through passage 8 and around passages 9, which encircle the motor and so the coolant cools the motor. In the illustrated embodiment, these passages lead into passage 10 which encircles the primary bearing assembly and protects overheating of that. The used coolant may then be led through passage 11 into the rotor assembly from which it is discharged in conventional way through passage 12, after cooling the rotor of the rotor assembly 4, as a mixture of water and water vapour.

The rotor assembly 4 comprises an inner flange 13 which is non-moveably fixed on the axle 3, a rotor 14 having an appropriate peripheral fiberising surface 15, and a retaining member 16 which is held against the rotor by a threaded member 17 which is threaded at 18 into the end of the flange 13 and via that to the shaft 3.

The rotor 15 is thus trapped between shoulder 19 on the inner flange and shoulder 20 on the retaining member 16 and can only be released by removal of the threaded member 17.

In order to provide a non-moveable fixing of the flange 13 on the shaft 3, a shrink fit of the flange is provided onto the shaft 3 between the outer surface of the shaft and the inner surface of th flange 13. This shrink fit may exist along the entire length of the area where the flange surrounds the shaft, or it may apply only over part of the length, sufficient to give a non-moveable fit. Preferably the shrink fit exists over the interface area 21 between the inner end 22 of the flange 13 and a port 23, with a looser fit (and thus a very small clearance) between the shaft 3 and the flange 13 over area 24 between the port 23 and the outer end 25 of the flange. In order to remove the shrunk-fit flange from the shaft, oil may be forced into the port and along the clearance over area 24 so as to exert pressure on to the annular surface of the flange and thereby to create a force to move the flange off the shaft.

An Auto-Balancing Unit 26 is mounted on the shaft between the bearings 5 and the flange 13.

A non-rotatable pipe 27 is mounted within the bore of the shaft 3. The pipe extends through a coupling 28 which is fixed in the housing 1 to a bearing assembly 29 for the pipe, i.e., between the rotating shaft and the pipe. The pipe discharges into the space 30 from which fluid or solid material may then be thrown outwardly through outlets 31 and distributed radially by an inverted cup 32, in known manner.

The apparatus illustrated in the drawings has a total length from the inlet 7 to the distributor 32, typically of from 0.5 to 1.0 metres, compared to conventional prior art units having a typical length of about 2 metres. With rotors having conventional diameters in the range 100 to 400 mm (with the top rotor generally being 100 to 250 mm and the others generally being 150 to 400 mm), the speed of the rotors can conveniently be of the order of 3000 to 15000 rpm without any adverse wear effects, relative to what was encountered with prior systems operating at similar rotor sizes but at lower speed. Thus the acceleration field which can be used in the invention can be up to three times as high without incurring worse wear problems.

## Claims

1.  A centrifugal fiberising spinner unit comprising
    a unit housing (1),
    a motor (2) which is mounted in the housing (1),
    an axle (3) which is rotatably driven by, and is coaxial with, the motor (2) and which is surrounded by the housing, and
    a rotor assembly (4) comprising an inner flange (13) mounted on the axle (3) and a rotor (14, 15) releasably mounted on the flange (13) distant from the motor (2),
    **characterised in that** the axle (3) is a rigid element which extends from within the motor (2) to the flange (13) through a primary bearing assembly (5) between the axle element (3) and the housing (1) which surrounds the axle (3),
    the flange (13) is non-moveably fixed on the axle (3), and
    the unit includes passages (7, 8, 9, 10, 11) for leading liquid coolant through the housing (1) and for cooling the motor (2).

2.  A unit according to claim 1 in which the axle element (3) is an integral shaft.

3.  A unit according to claim 1 or claim 2 in which the axle element (3) extends through an automatic balancing unit (26) mounted on the shaft at a position between the primary bearing assembly (5) and the flange (13) or within the flange (13).

4.  A unit according to any preceding claim in which the flange (13) is non-moveably fitted onto the axle element (3) by a shrink fit (21).

5.  A unit according to any preceding claim in which the axle element (3) extends additionally through a secondary bearing assembly (6) on the side of the motor (2) distant from the rotor assembly (4).

6.  A unit according to any preceding claim in which the axle element (3) has a coaxial bore with a non-rotatable pipe (27) fixed in the housing (1) on the side of the motor (2) distant from the rotor assembly (4) and extending through the bore and a bearing assembly (29) for the pipe and discharging from the rotor assembly (4).

7.  A unit according to any preceding claim including an air supply system for supplying a blast of air around and forward past the rotor for promoting fiberisation of melt and for carrying fibres forward from the rotor.

8.  A centrifugal cascade spinner comprising at least three spinners according to any preceding claim arranged in a cascade spinner housing and including an air supply system for supplying blasts of air around and forward past the rotors for promoting fiberisation of melt and for carrying fibres forward from the rotor.

## Patentansprüche

1.  Zentrifugal-Zerfaserungsschleudervorrichtungs-Einheit umfassend
    eine Gehäuseeinheit (1),
    einen Motor (2), der in dem Gehäuse (1) montiert ist,
    eine Achse (3), die in drehbarer Weise von dem Motor (2) angetrieben wird und koaxial zum Motor (2) ist und von dem Gehäuse umgeben ist, und
    einen Rotoraufbau (4) umfassend einen Innenflansch (13), der an der Achse (3) montiert ist, und einen Rotor (14, 15), der lösbar an dem Flansch (13) entfernt von dem Motor (2) montiert ist,
    **dadurch gekennzeichnet, dass** die Achse (3) ein starres Element ist, das sich von innerhalb des Motors (2) zu dem Flansch (13) durch einen primären Lageraufbau (5) zwischen dem Achselement (3) und dem Gehäuse (1), das die Achse (3) umgibt, erstreckt,
    der Flansch (13) in unbeweglicher Weise an der Achse (3) fixiert ist und
    die Einheit Durchgänge (7, 8, 9, 10, 11) zum Durchleiten von flüssigem Kühlmittel durch das Gehäuse (1) und zum Kühlen des Motors (2) beinhaltet.

2.  Einheit nach Anspruch 1, in der das Achselement (3) eine einstückige Welle ist.

**3.** Einheit nach Anspruch 1 oder Anspruch 2, in der das Achselement (3) sich durch eine automatische Auswuchteinheit (26) erstreckt, die auf der Welle an einer Stelle zwischen dem primären Lageraufbau (5) und dem Flansch (13) oder innerhalb des Flansches (13) montiert ist.

**4.** Einheit nach irgendeinem vorhergehenden Anspruch, in welcher der Flansch (13) durch einen Schrumpfsitz (21) in unbeweglicher Weise an dem Achselement (3) angebracht ist.

**5.** Einheit nach irgendeinem vorhergehenden Anspruch, in der das Achselement (3) sich zusätzlich durch einen sekundären Lageraufbau (6) auf der Seite des Motors (2) entfernt von dem Rotoraufbau (4) erstreckt.

**6.** Einheit nach irgendeinem vorhergehenden Anspruch, in der das Achselement (3) eine koaxiale Bohrung mit einem nicht drehbaren Rohr (27) fixiert in dem Gehäuse (1) auf der Seite des Motors (2) entfernt von dem Rotoraufbau (4) und sich erstreckend durch die Bohrung und einen Lageraufbau (29) für das Rohr und austretend aus dem Rotoraufbau (4) aufweist.

**7.** Einheit nach irgendeinem vorhergehenden Anspruch enthaltend ein Luftzufuhrsystem zum Zuführen eines Luftstrahls um den Rotor herum und vorwärts gerichtet an ihm vorbei zur Förderung der Faserbildung der Schmelze und zum Tragen der Fasern in Vorwärtsrichtung vom Rotor.

**8.** Zentrifugal-Kaskadenschleudervorrichtung umfassend mindestens drei Schleudervorrichtungen nach irgendeinem vorhergehenden Anspruch, die in einem Kaskadenschleudervorrichtungsgehäuse angeordnet sind und enthaltend ein Luftzufuhrsystem zum Zuführen von Luftstrahlen um die Rotoren herum und vorwärts gerichtet an ihnen vorbei zur Förderung der Faserbildung von Schmelze und zum Tragen von Fasern in Vorwärtsrichtung vom Rotor.

**Revendications**

**1.** Unité de séparateur de fibrage centrifuge comprenant :

un logement d'unité (1)
un moteur (2) qui est monté dans le logement (1),
un essieu (3) qui est entraîné de manière rotative par, et est coaxial avec le moteur (2) et qui est entouré par le logement, et
un ensemble de rotor (4) comprenant un rebord interne (13) monté sur l'essieu (3) et un rotor (14, 15) monté de manière amovible sur le rebord (13) distant du moteur (2),

**caractérisé en ce que** l'essieu (3) est un élément rigide qui s'étend depuis l'intérieur du moteur (2) jusqu'au rebord (13) en passant par un ensemble de palier principal (5) entre l'élément d'essieu (3) et le logement (1) qui entoure l'essieu (3),
le rebord (13) est fixé de manière immobile sur l'essieu (3), et
l'unité comprend des passages (7, 8, 9, 10, 11) pour conduire le réfrigérant liquide à travers le logement (1) et pour refroidir le moteur (2).

**2.** Unité selon la revendication 1, dans laquelle l'élément d'essieu (3) est un arbre solidaire.

**3.** Unité selon la revendication 1 ou 2 dans laquelle l'élément d'essieu (3) s'étend à travers une unité d'équilibrage automatique (26) montée sur l'arbre à une position située entre l'ensemble de palier principal (5) et le rebord (13) ou à l'intérieur du rebord (13).

**4.** Unité selon l'une quelconque des revendications précédentes dans laquelle le rebord (13) est monté de manière immobile sur l'élément d'essieu (3) avec un ajustage par contraction (21).

**5.** Unité selon l'une quelconque des revendications précédentes, dans laquelle l'élément d'essieu (3) s'étend de plus à travers un ensemble de palier secondaire (6) du côté du moteur (2) distant de l'ensemble de rotor (4).

**6.** Unité selon l'une quelconque des revendications précédentes, dans laquelle l'élément d'essieu (3) comprend un alésage coaxial avec un tuyau non rotatif (27) fixé dans le logement (1) du côté du moteur (2) distant de l'ensemble de rotor (4) et s'étendant à travers l'alésage et un ensemble de palier (29) pour le tuyau et s'évacuant à partir de l'ensemble de rotor (4).

**7.** Unité selon l'une quelconque des revendications précédentes comprenant un système d'alimentation d'air pour alimenter un courant d'air autour et vers l'avant, au-delà du rotor pour favoriser le fibrage du bain et pour transporter les fibres vers l'avant à partir du rotor.

**8.** Séparateur centrifuge en cascade comprenant au moins trois séparateurs selon l'une quelconque des revendications précédentes, agencés dans un logement de séparateur en cascade et comprenant un système d'alimentation d'air pour alimenter des courants d'air autour et vers l'avant, au-delà des rotors pour favoriser le fibrage du bain et pour transporter les fibres vers l'avant à partir du rotor.

Fig. 1

Fig.2